# EUROPÄISCHE PATENTSCHRIFT

(11) **EP 3 344 956 B1**
(45) Veröffentlichungstag und Bekanntmachung des Hinweises auf die Patenterteilung: **11.12.2019**
(21) Anmeldenummer: 16763739.6
(22) Anmeldetag: 02.09.2016
(51) Int. Cl.: G01G 19/56, G01G 3/14, G01G 21/28, G01G 21/23

(54) **KÜCHENWAAGE**
KITCHEN SCALE
BALANCE DE CUISINE

(30) Priorität: 03.09.2015 DE 202015104676 U
(43) Veröffentlichungstag der Anmeldung: 11.07.2018
(73) Patentinhaber: Leifheit AG, 56377 Nassau (DE)
(72) Erfinder: DENK, André, 45481 Mülheim a.d. Ruhr (DE); SPIELBUSCH, Patrick, 56068 Koblenz (DE); MODDICK, Christian, 48317 Drensteinfuhrt (DE); EMTER, Artjom, 56077 Koblenz (DE)
(74) Vertreter: Bungartz Christophersen mbB
(86) Internationale Anmeldenummer: PCT/EP2016/070750
(87) Internationale Veröffentlichungsnummer: WO 2017/037249

(56) Entgegenhaltungen:
- EP-A1- 0 736 757
- WO-A1-2011/019458
- DE-A1-102010 048 950
- DE-A1-102011 051 612

## Beschreibung

Die Erfindung betrifft eine Küchenwaage nach Anspruch 1.

Insbesondere betrifft die Erfindung eine Küchenwaage mit
- einer Tragplatte,
- einem die Tragplatte stützenden, insbesondere schalenartigen Unterbau,
- Wägezellen, die zwischen dem Kraftfluss von der Tragplatte zum Unterbau zwischengeschaltet sind und zumindest einen Dehnungsmessstreifen aufweisen, der durch die Deformation der Wägezelle infolge einer auf der Tragplatte liegenden Last deformiert wird,
- einer Elektronik, die aus dem Grad der Deformation der Wägezellen das Gewicht der Last zu berechnen vermag, sowie mit
- einer Anzeigevorrichtung zum Anzeigen des ermittelten Gewichtes und einem Batteriefach zur Aufnahme einer die Elektronik mit Strom versorgenden Spannungsquelle,
wobei die Küchenwaage als offene Küchenwaage mit einem Spalt zwischen der Tragplatte und dem Unterbau ausgebildet ist, so dass Wasser und/oder Feuchtigkeit durch den Spalt in die Küchenwaage eindringen kann und aus der Küchenwaage gelangen kann und die Elektronik sowie die Anzeigevorrichtung wasserdicht eingekapselt sind, die Tragplatte und der Unterbau mit Ausnahme des Batteriefaches und der eingekapselten Elektronik keine Hohlräume aufweist und das Batteriefach gegen eindringendes Wasser abgedichtet ist.

Die üblichen Küchenwaagen weisen entweder unterhalb der Tragplatte Stützfüße auf, über die sie auf einem Untergrund aufstehen. Im Bereich der Verbindung der Stützfüße oder in den Stützfüßen selbst sind dann Wägezellen vorgesehen. Diese Wägezellen sind deformierbare Dehnungsmessstreifen, wobei die Elektronik über die Deformation dass auf der Tragplatte aufliegende Gewicht, insbesondere unter Verwendung einer Messbrücke, zu bestimmen vermag.

Eine andere Ausgestaltung eine Küchenwaage weist einen eher schalenartigen oder flachen Unterbau auf, wobei die Wägezellen zwischen der Tragplatte und dem Unterbau angeordnet sind. Hier existiert zwischen dem Unterbau und der Tragplatte ein Spalt, der infolge der Auslenkung der Tragplatte zusammengedrückt wird. Die Elektronik ist dabei üblicherweise am Unterbau angeordnet, kann aber auch an der Tragplatte vorgesehen sein. Gleiches gilt für die Anzeigevorrichtung.

Die diese Küchenwaagen haben den Nachteil, dass sie nicht flüssigkeitsdicht sind. Zwar kann üblicherweise während des normalen Gebrauchs in einer Küche Flüssigkeit nicht in die Waage hinein gelangen, jedoch kann die Waage nicht unter fließendem Wasser oder gar in einer Spülmaschine gereinigt werden.

Es wurden daher Versuche gemacht, eine Küchenwaage vollständig geschlossen auszubilden, so dass diese wasserdicht ist, wie es zum Beispiel von elektrischen Zahnbürsten bekannt ist. Nachdem die Wägezellen aber durch Relativbewegung der Tragplatte zu den übrigen Bereichen der Küchenwaage ausgelenkt werden müssen, ist ein rundum geschlossenes Gehäuse nur schwer zu realisieren. Gerade im Bereich der Wägezellen ist Feuchtigkeit allerdings störend und verfälscht das Messergebnis. Dies ist insbesondere im Bereich der Küchenwaagen hinderlich, da diese üblicherweise eine Genauigkeit von beispielsweise 1 g aufweisen müssen.

Darüber hinaus hat sich herausgestellt, dass trotz aller Bemühungen eine restlose Feuchtigkeitsdichtigkeit kaum realisierbar ist.

Küchenwaagen der eingangsgenannten Art sind aus der DE 10 2011 051 612 A1 bekannt. Diese Küchenwaagen weisen entweder unterhalb der Tragplatte Stützfüße auf, über die sie auf einem Untergrund aufstehen. Im Bereich der Verbindung der Stützfüße oder in den Stützfüßen selbst sind dann Wägezellen vorgesehen. Diese Wägezellen weisen mit der Deformation der Wägezellen zusammen deformierbare Dehnungsmessstreifen auf, wobei die Elektronik über die Deformation der Dehnungsmessstreifen das auf der Tragplatte aufliegende Gewicht zu bestimmen vermag.

Die Küchenwaage weist einen schalenartigen oder flachen Unterbau auf, wobei die Wägezellen zwischen der Tragplatte und dem Unterbau angeordnet sind. Hier existiert zwischen dem Unterbau und der Tragplatte ein Spalt, der infolge der Auslenkung der Tragplatte zusammengedrückt, aber nicht geschlossen wird. Die Elektronik ist dabei am Unterbau angeordnet, kann aber auch an der Tragplatte vorgesehen sein. Gleiches gilt für die Anzeigevorrichtung.

Diese spülmaschinengeeigneten Küchenwaagen haben den Nachteil, dass sie nicht flüssigkeitsdicht sind und somit Spülwasser und Verunreinigungen bzw. Fremdkörper in das Innere der Küchenwaage eindringen können. Zwar sind die Elektronik und das Batteriefach gegen Feuchtigkeit geschützt, die Wägezellen können aber im Bereich der Dehnungsmessstreifen nass werden und durch chemische Einflüsse des Reinigungsmittels oder durch mechanische Stöße der Fremdkörper beschädigt werden. Schließlich stört schon eine erhöhte Luftfeuchtigkeit, erst recht eine Wasserbenetzung die Messung empfindlich.

Aus der US 2005/0155435 A1 ist eine Wägezelle u.a. für Wiegezwecke bekannt, die einen, insbesondere von einer Polymerbeschichtung gebildeten, Schutz gegen Wasser im Bereich der Dehnungsmessstreifen aufweist. Diese Beschichtung ist wasserdicht und vergleichsweise aufwändig, so dass sich dieser Aufwand nur in Verbindung mit teuren industriellen Waagen lohnt. Haushaltswaagen stehen jedoch unter einem hohen kostendruck, so dass eine solche wasserdichte Beschichtung hier nicht möglich ist. Ferner darf die Beschichtung die Messgenauigkeit nicht beeinflussen.

Aufgabe der Erfindung ist es daher, eine Küchenwaage dahingehend weiterzubilden, dass sie unter fließendem Wasser, unter Wasser getaucht oder in einer Spülmaschine gereinigt werden kann und anschließend möglichst schnell wieder einsatzbereit ist.

Diese Aufgabe wird nach der Erfindung dadurch gelöst, dass die Küchenwaage als offene Küchenwaage ausgebildet ist, wobei zwischen der Tragplatte und dem Unterbau ein fugenartiger Spalt vorgesehen ist, durch den Wasser und/oder Feuchtigkeit in die Küchenwaage eindringen kann und aus der Küchenwaage gelangen kann und dass die Wägezelle zumindest einen Dehnungsmessstreifen aufweist, der zumindest partiell mit einer Parylene-Beschichtung versehen ist.

Parylene sind Kunststoffe, die hydrophob und chemisch resistent sind. Sie weisen einen guten Schutz gegenüber anorganischen und organischen Medien, starken Säuren, Laugen, Gasen und Wasserdampf auf und sind somit in der Lage, die mit ihnen beschichteten Materialien vor Einflüssen in einer Spülmaschine oder in einem Handwaschbecken zu schützen. Als dünne und transparente Beschichtung mit hoher Spaltgängigkeit sind sie geeignet für komplex gestaltete Substrate, so dass mit ihnen neben den Wägezellen auch die Platine der Elektronik beschichtet und geschützt werden können.

Da Parylene durch chemische Gasphasenabscheidung erzeugt werden und somit keine Kantenflucht bilden, sind sie auch aufgrund ihrer guten dielektrischen Eigenschaften mit hoher Spannungsfestigkeit und niedriger Dielektrizitätskonstante geeignet, dauerhaft die freiliegenden Wägezellen und gegebenenfalls auch die Elektronik zu schützen.

Zum Aufbau einer spülmaschinenfesten Waage können die vollständige Elektronik und alle Wägezellen vollständig mit der Parylene-Beschichtung versehen sein. Alternativ kann die Elektronik auch eingekapselt sein, zum Beispiel in einem verschweißten Kunststoffgehäuse angeordnet sein.

Die Dicke der Parylene-Beschichtung kann bevorzugt bis zu 1 mm betragen, insbesondere kann die Dicke zwischen 0,01 und 0,5mm liegen. Derartige Schichtdicken lassen sich leicht mit dem speziellen Herstellungsverfahren der Parylene-Beschichtung erzielen.

Zur Beschichtung können alternativ sogenannte:

| | |
|---|---|
| • Parylene N mit der Strukturformel: | 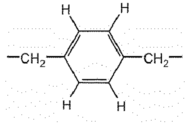 |
| • Parylene C mit der Strukturformel: | 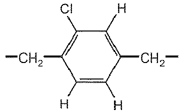 |
| • Parylene D mit der Strukturformel: | 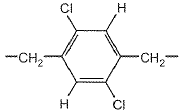 |
| • Parylene HT mit der Strukturformel: | 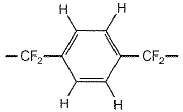 |

verwendet werden.

Die Parylene N-Beschichtung eine Beschichtung aus Kohlenwasserstoff Poly-p-xylylen. Parylene C, Parylene D oder Parylene HT-Beschichtungen sind Beschichtung aus halogenierten Polymeren, wie aus den oben wiedergegebenen Strukturformeln erkennbar ist.

Parylene N-Beschichtungen haben den Vorteil, dass sie sehr gut in Spalte einzudringen vermögen. Somit eignen sich diese hinsichtlich der Spaltabdichtung besonders gut. Auch die halogenierten Polymere dringen noch recht gut, auch wenn im Vergleich zu den Parylene N-Beschichtungen etwas schlechter, in Spalte ein, haben aber den Vorteil einer höheren Feuchtigkeitsdichtigkeit und insbesondere im Falle der Parylene D-Beschichtung einer höheren Temperaturbeständigkeit.

Parylene HT-Beschichtungen wiederum weisen eine ausgezeichnete Spaltgängigkeit auf und sind bis zu 450°C temperaturbeständig. Letztlich sind somit alle Parylene-Beschichtungen grundsätzlich geeignet, die Elektronik und die Wägezellen einer Waage zu schützen. Die konkrete Werkstoffwahl wird dann von den besonderen Einsatzbedingungen abhängen.

Alternativ kann natürlich auch eine Kombination der Eigenschaften dadurch genutzt werden, dass die Parylene Beschichtung ihrerseits mit einer weiteren Parylene Beschichtung beschichtet wird. So kann eine erste Beschichtung mit hoher Spaltdichtigkeit insbesondere im Bereich einer Platine sozusagen als dichtende Grundierung aufgebracht werden, während eine Deckschicht mit höheren Barrieren gegen Flüssigkeitsdurchdringungen oder höherer Temperaturfestigkeit die finale Eigenschaft bewirkt. Auch kann die Beschichtung, auch wenn sie auch mehreren Parylene-Beschichtungen besteht, von einer mechanischen Schutzschicht abgedeckt werden, die die dünne Parylene-Beschichtung vor mechanischen Einflüssen in der Spülmaschine schützt. Diese mechanische Schutzschicht kann zum Beispiel aus einem Silikon oder einem Nitril-Butadien-Kautschuk (NBR) bestehen.

Die Elektronik kann ebenfalls mit Parylene beschichtet sein, alternativ (oder zusätzlich als doppeltem Schutz) kann sie eingekapselt und damit gegen Feuchtigkeit, insbesondere gegen flüssiges Wasser, gesichert werden.

Der Bereich zwischen der Tragplatte und dem Unterbau wird insbesondere dann, wenn der Unterbau in Form einer Platte oder flachen Schale vorliegt, bewusst offen gehalten, so dass Reinigungswasser und bei einer möglichen Ausgestaltung sogar Feststoffe, die zum Beispiel in einer Spülmaschine oder einem Spülbecken vorhanden sind, zwischen die beiden Bauteile gelangen können. Die Erfindung geht davon aus, dass diese Flüssigkeitsmengen nach dem Reinigungsprozess wieder ablaufen und die feuchten Bauelemente vergleichsweise schnell wieder abtrocknen können, so dass eine Betriebsbereitschaft nach dem Trocknungsvorgang wieder hergestellt ist.

In die Waage eindringende Feststoffe können durch die offene Ausführung während des Spülprozesses wieder ausgespült werden. Dadurch, dass bei einer möglichen Ausgestaltung die Elektronik mit üblichen Materialien, zum Beispiel einem Silikon, vergossen wird, ist diese gegen eindringendes Wasser geschützt. Nachdem erfahrungsgemäß diese Materialien aber nicht in der Lage sind, eine Dampfdurchlässigkeit zu vermeiden, wird erfindungsgemäß bewusst in Kauf genommen, dass Feuchtigkeit in die Elektronik eindringen kann und anschließend wieder abtrocknen muss.

Auch die Wägezellen werden im sensiblen Bereich, also dem Bereich, in dem sich die Dehnungsmessstreifen verformen, mit einer Beschichtung versehen. Diese Beschichtung wird bevorzugt dünn gehalten, so dass sie schnell austrocknen kann. Durch die offene Bauweise der Waage kann die Konzentrationsdifferenz zwischen den feuchten Bauteilen und den umgebenden Luftbereichen groß gehalten werden, da aus der Elektronik und der Beschichtung der Wägezellen entweichende Feuchtigkeit schnell abgeführt wird. Dies ist insbesondere dann vorteilhaft, wenn die noch feuchte Waage zum Beispiel im Küchenschrank gelagert wird, so dass durch die dort vorliegenden niedrigen Temperaturen die Diffusionsprozesse verlangsamt sind.

Während in der vergleichsweise heißen Umgebung einer Spülmaschine die Diffusion in die Elektronik und das Material der Beschichtung der Wägezellen durch die hohen Temperaturen begünstigt wird, wird nachfolgend beim Lagern der Waage durch die dann niedrigeren Temperaturen der Diffusionsgrad geringer sein. Zwar besteht während der Trocknung in der Spülmaschine die Möglichkeit, die dann vorliegenden hohen Temperaturen zu nutzen, jedoch herrscht hier eine überwiegend feuchte Atmosphäre vor, so dass die Feuchtigkeitskonzentration in der umgebenden Luft diesen Effekt weitgehend kompensiert.

Dehnungsmessstreifen weisen üblicherweise hohe notwendige Isolationswiderstände von > 100 MOhm auf. Diese werden durch die Wasseraufnahmefähigkeit der Beschichtung auf ein unbrauchbares Maß reduziert. Ferner kann natürlich bei der feuchten Beschichtung der Elektronik ein Fehlstrom oder Kurzschluss auftreten, der eine korrekte Messung unmöglich macht.

Die Elektronik ist daher zum einen an die Tatsache angepasst, dass möglicherweise eine feuchte Umgebung vorliegen könnte. Diese Anpassung besteht zum Beispiel darin, dass die Leiterbahnen der Elektronik einen im Vergleich zu konventionellen Waagen vergrößerten Abstand zueinander aufweisen, wobei dieser Abstand beispielsweise verdoppelt und bei einer möglichen Ausgestaltung der Erfindung größer als 1mm ist.

Weiterhin sind die elektrischen Verbindungen zwischen den Wägezellen und der Elektronik, die üblicherweise eine Hauptplatine mit darauf angeordneten Messverstärker aufweist, bevorzugt nicht von Kabeln gebildet, die mit Litzen ummantelt sind, sondern als offene Leiter ausgebildet, die schneller abtrocknen können. Hier können beispielsweise Leitungen aus Kupferlackdraht ohne Mantel Verwendung finden.

Ferner weist die Elektronik einen Schutz vor Fehlmessungen auf, in dem sie die Feuchtigkeit direkt oder indirekt zu bestimmen vermag. Eine direkte Bestimmung erfolgt über Feuchtigkeitssensoren, die beispielsweise durch einen gewissen Grad der Feuchtigkeit kurzgeschlossen werden. Da solche Sensoren nicht überall eingesetzt werden können und den Messaufwand erhöhen, benutzt eine bevorzugte Ausgestaltung der Erfindung die ohnehin vorhandene Sensorik. In diesem Fall wird die Messbrücke zur Bestimmung der Güte der Messung herangezogen.

Der Trocknungszustand wird durch die Beobachtung des Driftens des Nullpunktes der Messbrücke bestimmt. Ein Wegdriften des Nullpunktes der abgestimmten Messbrücke deutet dabei auf zu feuchte Messstellen in den Wägezellen hin. Die Verstimmung der Messbrücke im Nullpunkt ist also ein sicheres Zeichen für die momentane Unbrauchbarkeit des Messsystems.

Die Elektronik kann prüfen, ob die Waage in der Lage ist, zuverlässig das Gewicht zu ermitteln. Dies kann beim Einschaltversuch erfolgen, ferner kann dies auch nach dem Einschalten oder auch im Ruhezustand erfolgen. Die Prüfung kann, wenn es keine initiale Prüfung beim Einschaltversuch ist, kontinuierlich oder in gewissen Abständen, beispielsweise ein bis zehnmal pro Sekunde vorgenommen werden. Bei positiver Prüfung schaltet die Elektronik in den Bereitschaftsmodus und ermittelt das auf der Tragplatte aufliegende Gewicht. Bei negativer Prüfung wird bevorzugt eine Fehlermeldung oder eine Anzeige "Bitte warten" ausgegeben oder die Waage wird sich einfach nicht einschalten.

Waagen werden heutzutage häufig über berührungsempfindliche Sensoren ein- und ausgeschaltet. Solche Sensoren reagieren auf die Änderung des elektrischen Feldes in der Nähe einer Elektrode. Dies kann natürlich auch im Spülbecken bzw. in der Spülmaschine geschehen, so dass die Gefahr besteht, dass unbewusst die Waage eingeschaltet wird. Dies führt zu einer Verringerung der Betriebsdauer, was offensichtlich unerwünscht ist.

Eine bevorzugte Ausgestaltung der Waage verwendet daher einen zusätzlichen Sensor, der einen Zustand, in dem die Waage üblicherweise nicht eingeschaltet werden soll, feststellt und das Einschalten dann unterbindet. Dies kann etwa ein Lichtsensor sein, der feststellt, dass sich die Waage in einem dunklen Raum befindet. Dies ist ja in einer Spülmaschine der Fall, so dass dort dann ein Einschalten durch den kapazitiven Sensor verhindert werden kann. Beim Reinigen in einem Spülbecken ist dies meist nicht kritisch, da die Waage ja nur sehr kurz in diesem Becken verbleibt, so dass der zusätzliche Energieverbrauch tolerabel ist.

Anstelle des optischen Sensors kann auch jeder andere Sensor eingesetzt werden, der die kritischen Lagerungen oder Zustände erfassen kann. Dies kann beispielsweise ein Temperatursensor sein, der die üblicherweise höheren Temperaturen in der Spülumgebung, insbesondere der Spülmaschine, feststellt.

Ferner kann auch eine Kombination von kapazitivem Sensor und Zusatzsensor aufweisen, wobei dann beide Sensoren betätigt werden müssen. Dies kann über ein gemeinsames Tastfeld geschehen. So kann entweder ein optischer Sensor oder ein Temperaturfühler, der eine Temperaturdifferenz zwischen einem Feld, auf das der Benutzer seinen Finger auflegen muss, und den Umgebungsbereichen misst, zusammen mit dem Signal des kapazitiven Sensors als Schaltimpuls herangezogen werden. In beiden Fällen ist es unwahrscheinlich, dass in der dunklen Spülmaschine oder unter Wasser ein solcher Kombinationssensor ausgelöst wird.

Die Tragplatte und der Unterbau sind so aufgebaut, dass eindringendes Wasser möglichst schnell ablaufen kann. Auch wenn zum Beispiel ein schalenartiger Unterbau konkav gekrümmt sein wird, wird dieser bevorzugt so flach ausgebildet, dass bei stehender Waage in der Telleraufnahme einer Spülmaschine das Wasser leicht abfließen kann. Eine weitere bevorzugte Ausgestaltung weist eine Tragplatte auf, die lösbar mit dem Unterbau verbunden ist. Bei dieser Ausgestaltung kann der Benutzer den Wasserablauf noch weiter optimieren, indem er die Tragplatte separat vom Unterbau in der Spülmaschine platziert.

Bei abnehmbarer Tragplatte muss der Benutzer nachfolgend die Waage wieder zusammensetzen. Dies kann über Steckverbindungen in Form von zweiteiligen Stützelementen geschehen, wobei ein oberer Teil an der Tragplatte und ein unteren Teil am Unterbau vorgesehen sind, die miteinander verbunden werden. Von diesen Paarungen wird die Waage wenigstens drei, bevorzugt vier Stück aufweisen, so dass es möglicherweise nicht ganz einfach ist, die Waage ordnungsgemäß zusammenzusetzen.

Eine besonders bevorzugte Weiterbildung weist daher eine Magnetverbindung zwischen der Tragplatte und dem Unterbau auf. Hier sind mehrere Magnete sowohl an der Tragplatte als auch am Unterbau vorgesehen, die sich teilweise abstoßen und teilweise anziehen. Die Magnete sind so angeordnet, dass die Abstoßungskräfte und die Anziehungskräfte die Tragplatte selbsttätig oberhalb des Unterbaus zentrieren. Nach dieser selbstständigen Zentrierung können dann die Anziehungskräfte die Tragplatte am Unterbau halten. Bei einer weiteren Ausgestaltung diese Erfindung sind die Magnete unmittelbar an den Wägezellen vorgesehen, die dann zwischen zwei Magneten bzw. zwei Magnetclustern angeordnet sind, die jeweils an der Tragplatte und am Unterbau vorgesehen sind.

Eine andere Ausgestaltung der Waage weist eine oder mehrere Abdichtungen gegen Feststoffe oder auch gegen flüssiges Wasser auf. Eine Abdichtung gegen flüssiges Wasser muss nicht notwendigerweise jede Menge von Flüssigkeit zurückhalten, sondern zur Erzielung eines positiven Effektes nur das Eindringen der Flüssigkeit verringern. Eine solche Abdichtung kann zum Beispiel von einem Sieb gebildet sein, das den Spalt zwischen der Tragplatte und dem Unterbau verschließt. Dieses elastische Sieb kann zum Beispiel aus Kunststoff gefertigt sein und eine Maschenweite aufweisen, die das Passieren von Flüssigkeit erschwert oder verhindert. Eine flüssigkeitsabweisende Oberfläche, so wie sie zum Beispiel von Kunststoffen, insbesondere PET, geboten wird, kann diesen Effekt zusätzlich verbessern.

Das Sieb sollte eine Maschenweite von weniger als 1 mm aufweisen und wasserfest sein. Ferner sollte es die mechanische Verspannung zwischen Tragplatte und Unterbau möglichst gering halten, also möglichst ohne Aufnahme mechanischer Spannung die Bewegungsfuge verschließen. Vorteilhaft ist eine Lage des Siebes rechtwinklig zur Bewegungsrichtung der Tragplatte. Eine eingeprägte Wellenform des Siebes kann die Steifigkeit zusätzlich verringern, um so die mechanische Verspannung noch weiter zu reduzieren. Ferner kann das Sieb nur einseitig befestigt sein, zum Beispiel an der Tragplatte oder an dem Unterbau.

Sofern die Maschenweite des Siebes sehr gering gewählt wird, beispielsweise weniger als 0,5 mm, kann es passieren, dass zwar Wasser in der Spülmaschine eindringt, dieses aber aufgrund der geringen Maschenweite und der hydrophoben Wirkung der Oberfläche nicht mehr abfließen kann. Dies ist natürlich nicht erwünscht. Hierzu kann im Bereich des Bodens des Unterbaus ein Wasserablauf vorgesehen sein, über den das Wasser trotz des Siebes auslaufen kann. Ferner kann natürlich das Sieb selbst bewusst eingebrachte Durchgangsöffnungen als Wasserablauf aufweisen, wobei es in diesem Fall dann so geformt ist, dass Wasser innerhalb der querstehenden Waage in den Bereich dieser Durchgangsöffnungen fließt.

Das Sieb kann je nach Wunsch hydrophob oder hydrophil ausgebildet sein. Ein hydrophobes Sieb, insbesondere mit geringer Maschenweite hat den Vorteil, dass wenig Wasser in den Innenraum der offenen Waage fließen wird. Andererseits kann dann das dennoch eingetretene Wasser aber auch nicht so leicht abfließen. Ein hydrophiles Sieb wiederum hat den Vorteil, dass Flüssigkeit leicht durch das Sieb abfließen kann.

Zur Verbesserung des Abfließverhaltens kann das Wasser in der Waage auch mit einem Stoff, insbesondere einer Seife, versetzt werden, der die Flüssigkeitsspannung zusätzlich reduziert. Hier kann zum Beispiel ein Seifenpad, dass sich kontinuierlich verbraucht, verwendet werden.

Alternativ zu einem Sieb können auch Membrane oder ähnliche Mittel, wie Labyrinthdichtungen ohne Kraftschluss, Verwendung finden. Ferner sind Membrane möglich, die bei Wasserkontakt ihre Form verändern und so temporär den Bewegungsspalt zwischen der Tragplatte und dem Unterbau verschließen. Beim nachfolgenden Trocknungsvorgang stellen sich diese Membrane dann zurück, so dass der Kraftschluss wieder aufgehoben ist.

Schließlich ist es möglich, den Unterbau auch über ein Netz abzudecken, das parallel zur Tragplatte angeordnet ist und an den Seiten mit dem Unterbau fest verbunden ist. Dieses Netz kann dann zum Beispiel so ausgebildet sein, dass die zweiteiligen Stützelemente das Netz zwischen sich einspannen, wobei das Netz so locker über den Unterbau gelegt ist, dass hierdurch ein Kraftschluss vermieden oder zumindest deutlich reduziert ist. Ein solches Netz kann ebenso wie das die Fuge zwischen Tragplatte und Unterbau abdeckende Sieb Feststoffe und auch in gewissem Umfang Flüssigkeiten zurückhalten, so dass zum Beispiel ein Anbacken durch trocknende Feststoffe vermieden wird und gleichzeitig die Menge des Wassers, die nachfolgend wieder ablaufen muss, reduziert ist. Auch dieses Netz kann hydrophob ausgebildet sein, auch hier können die Maschenweiten weniger als 1 mm betragen.

Alternativ zu der Parylene-Beschichtung kann auch eine Beschichtung aus einem Nitrilkautschuk, insbesondere einem Nitril-Butadien-Kautschuk (NBR) mit einem Acrylnitrilanteil zwischen 18 und 50 Prozent verwendet werden. Dabei ist der Acrylnitrilanteil maßgeblich für die Temperaturfestigkeit der Beschichtung. Bevorzugt wird zur Erzielung einer großen Temperaturbeständigkeit ein Acrylnitrilanteil im unteren Bereich des oben genannten Bereiches gewählt, etwa ein Acrylnitril-Anteil von weniger als 30%, insbesondere von weniger als 25%. Alternativ kann auch ein hydrierter Nitril-Butadien-Kautschuk (HNBR) verwendet werden, bei dem durch die Hydrierung die Doppelbindungen des Nitril-Butadien-Kautschuks zugunsten von Einfachbindungen aufgebrochen sind. Auch ein Styrol-Butadien-Kautschuk oder Guttapercha können zur Bildung der Beschichtung verwendet werden. Diese Beschichtung ist nicht feuchtigkeitsdicht und weist bevorzugt eine Dicke von bis zum 1 mm auf.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
- Fig. 1: ein Ausführungsbeispiel einer erfindungsgemäßen Küchenwaage,
- Fig. 2: die in Figur 1 dargestellte Küchenwaage in einer Explosionsdarstellung und
- Fig. 3: ein Beispiel einer Wägezelle mit erfindungsgemäßer Beschichtung im Bereich des Dehnungsmessstreifens.

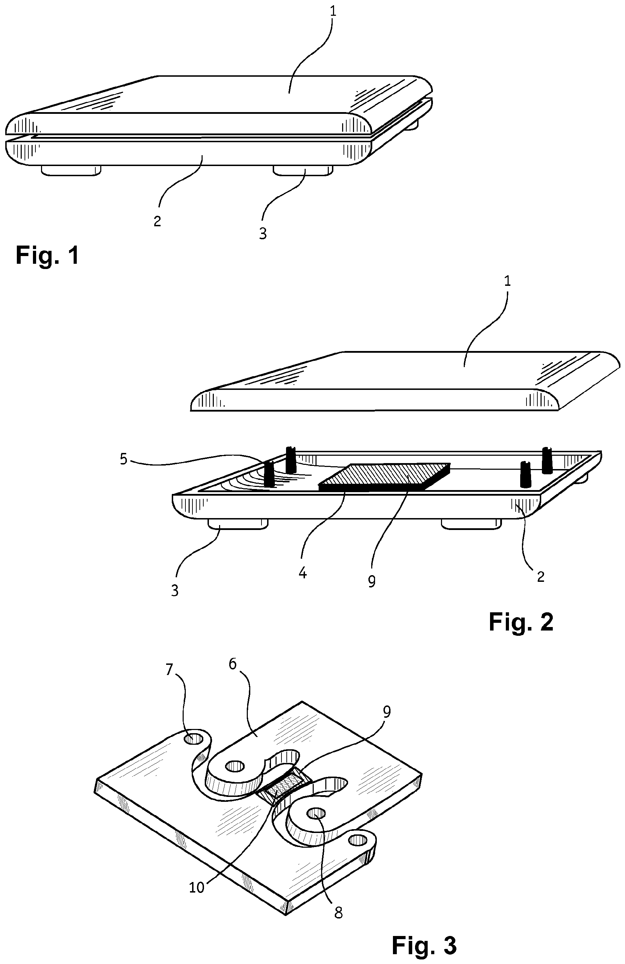

In Figur 1 ist schematisch eine Ausgestaltung einer erfindungsgemäßen Waage dargestellt. Hier ist der Unterbau 2 in Form einer flachen Wanne ausgebildet, wobei sich über Stützelemente 5 die Tragplatte 1 auf Wägezellen abstützt, die im Unterbau 2 vorgesehen sind. Alternativ können die Wägezellen natürlich auch am oberen Ende der Stützelemente 5 angeordnet sein. Der Unterbau 2 steht über Standfüße 3 auf einer Fläche auf.

Wie aus Figur 2 ersichtlich ist, weist die Waage im Inneren eine Elektronik 4 auf. Zur optischen Kennzeichnung der flüssigkeitsdichten, aber dampfdurchlässigen Kapselung ist die Elektronik 4 hier schwarz dargestellt. Eine solche Elektronik 4 ist üblicherweise zumindest eine Platine, auf der elektrische Bauelemente angeordnet und über Leiterbahnen miteinander verbunden sind. Diese Bauelemente und die Leiterbahnen sind bevorzugt über Silikon verkapselt.

Die Elektronik 4 wiederum ist mit den Wägezellen über offene Leiterbahnen in Form von Kupferlack verbunden, die sehr schnell abtrocknen können. Zur Vermeidung von Fehlströmen ist der Abstand der Leiterbahnen relativ zu konventionellen Waagen zueinander vergrößert (hier nicht sichtbar).

Durch die erfindungsgemäße Ausgestaltung der hier zweiteiligen Waage mit abnehmbarer Tragplatte 1 kann Flüssigkeit und Feuchtigkeit in die Waage eintreten, was erfindungsgemäß aber toleriert wird, da Flüssigkeit unmittelbar wieder ablaufen kann und Feuchtigkeit durch die offene Bauweise der Waage schnell abtrocknen kann. Da üblicherweise Waagen nicht zwischen jedem Wiegeprozess in einer Spülmaschine gereinigt werden, sondern nur am Ende der Benutzung, ist die notwendige Dauer der Abtrocknung der durch die Diffusion feucht gewordenen elektrischen Elemente in der Praxis nicht relevant.

In Figur 3 ist eine Wägezelle 6 einer möglichen Ausgestaltung einer erfindungsgemäßen Küchenwaage in vergrößerter Ansicht dargestellt. Die Wägezelle 6 weist einen vorderen Abschnitt auf, der mit der Unterschale über zwei unterschalenseitige Befestigungsbohrungen 7 verbinden wird. Ein hinterer Bereich wird mit der Tragplatte 1 über zwei tragplattenseitige Befestigungsbohrungen 8 verbunden. Im Übergangsbereich zwischen dem vorderen und dem hinteren Bereich ist eine Dehnungsmessstreifen 10 angeordnet.

Durch das Verbiegen der Wägezelle wird der Dehnungsmessstreifen 10 gedehnt, die damit korrespondierende Änderung des Widerstandes wird dann von der mit dem Dehnungsmessstreifen 10 verbundenen Elektronik 4 zur Bestimmung des Gewichts der auf der Tragplatte 1 aufliegenden Last genutzt. Dies entspricht im Wesentlichen dem Aufbau der Wägezellen 6 der bekannten Küchenwaagen.

Der Dehnungsmessstreifen 10 ist nun mit einer Beschichtung 9 versehen, die als Parylene Beschichtung ausgebildet ist. Die Beschichtung ist nicht feuchtigkeitsdicht und weist bevorzugt eine Dicke von bis zum 1 mm auf. Sie hat den Vorteil, dass sie den Dehnungsmessstreifen 10 vor mechanischen Einflüssen in einer Spülmaschine oder im Spülbecken schützt, andererseits aber als dauerhafter Schutz leicht aufzubringen ist, ohne die Messung zu verfälschen.

### Bezugszeichenliste:

- 1: Tragplatte
- 2: Unterbau
- 3: Standfuß
- 4: Elektronik
- 5: Stützelemente
- 6: Wägezelle
- 7: Unterschalenseitige Befestigungsbohrung
- 8: Tragplattenseitige Befestigungsbohrung
- 9: Beschichtung des Dehnungsmessstreifens
- 10: Dehnungsmessstreifen

## Patentansprüche

1. Küchenwaage mit einer Tragplatte (1), einem die Tragplatte (1) stützenden Unterbau (2) und wenigstens einer, zumindest einen Dehnungsmessstreifen (10) aufweisenden Wägezelle (6), die durch eine auf der Tragplatte (1) liegende Last deformiert wird, einer Elektronik (4), die aus dem Grad der Deformation der Wägezellen das Gewicht der Last zu berechnen vermag, sowie mit einer Anzeigevorrichtung zum Anzeigen des ermittelten Gewichtes und einem Batteriefach zur Aufnahme einer die Elektronik (4) mit Strom versorgenden Spannungsquelle, wobei die Küchenwaage als offene Küchenwaage mit einem Spalt zwischen der Tragplatte (1) und dem Unterbau (2) ausgebildet ist, so dass Wasser und/oder Feuchtigkeit durch den Spalt in die Küchenwaage eindringen kann und aus der Küchenwaage gelangen kann und die Elektronik (4) sowie die Anzeigevorrichtung feuchtigkeits- und wasserdicht eingekapselt sind sowie das Batteriefach gegen eindringendes Wasser abgedichtet ist, **dadurch gekennzeichnet, dass**
die Wägezelle (6) zumindest im Bereich des Dehnungsmessstreifens (10) mit einer als Parylene-Beschichtung ausgebildeten Beschichtung (9) versehen ist.

2. Küchenwaage nach Anspruch 1, **dadurch gekennzeichnet, dass** die Elektronik (4) wenigstens eine Platine aufweist, die mit einer Parylene-Beschichtung versehen ist, wobei insbesondere die vollständige Elektronik (4) und alle Wägezellen (6) vollständig mit der Parylene-Beschichtung versehen sind.

3. Küchenwaage nach einem der beiden vorhergehenden Ansprüche, **dadurch gekennzeichnet, dass** die Wägezelle (6) mit Ausnahme der Beschichtung (9) mit keiner weiteren Abdeckschicht versehen ist, wobei die Elektronik (4) eine Sensorik zur Bestimmung des Feuchtigkeitsgehalts der Beschichtung (9) aufweist und derart ausgebildet ist, dass sie einerseits während der Ermittlung eines feuchten oder nassen Zustandes oberhalb eines vorgegebenen Schwellwertes des bestimmten Feuchtigkeitsgehalts der Beschichtung (9) die Küchenwaage in einen inaktiven Zustand zu schalten vermag, in dem eine Gewichtsmessung nicht durchgeführt wird oder dessen Ergebnis nicht angezeigt wird und andererseits nach Unterschreiten des Schwellwertes die Küchenwaage in einen betriebsbereiten Zustand zu schalten vermag, in dem das Gewicht der auf der Tragplatte (1) aufliegenden Last gemessen und angezeigt wird.

4. Küchenwaage nach einem der vorhergehenden Ansprüche, **dadurch gekennzeichnet, dass** die Parylene-Beschichtung eine inerte und hydrophobe Polymerbeschichtung, eine Beschichtung (9) aus Kohlenwasserstoff Poly-p-xylylen (Parylene N) oder eine Beschichtung (9) aus halogenierten Polymeren (Parylene C, Parylene D oder Parylene HT) ist und eine Dicke von bis zu 1 mm, insbesondere eine Dicke zwischen 0,01 und 0,5mm, aufweist.

5. Küchenwaage nach einem der vorhergehenden Ansprüche, **dadurch gekennzeichnet, dass** die Elektronik (4) und die Wägezellen (6) zumindest abschnittsweise mit einer doppelten oder mehrfachen Parylene-Beschichtung versehen sind, wobei jede der Parylene-Beschichtungen ein Beschichtung (9) aus der Gruppe Parylene N, Parylene C, Parylene D und Parylene HT ausgewählt ist.

6. Küchenwaage nach einem der vorhergehenden Ansprüche, **dadurch gekennzeichnet, dass** die Parylene-Beschichtung mit einer Zusatzbeschichtung, insbesondere einer elastischen, flüssigkeitsdichten und dampfdurchlässigen Schutzschicht versehen ist, die die Parylene-Beschichtung vor mechanischen Einwirkungen zu schützen vermag und insbesondere von einem Silikon oder einem Nitril-Butadien-Kautschuk (NBR) gebildet ist.

7. Küchenwaage nach einem der vorhergehenden Ansprüche, **dadurch gekennzeichnet, dass** die Tragplatte (1) lösbar mit dem Unterbau (2) verbunden ist und der Unterbau (2) als flache Halbschale mit zumindest drei, die Tragplatte (1) stützenden Stützelementen (5) ausgebildet ist, wobei sich die Stützelemente (5) auf den Wägezellen (6) abstützen.

8. Küchenwaage nach einem der vorhergehenden Ansprüche, **dadurch gekennzeichnet, dass** die Elektronik (4) über eine flüssigkeitsdichte und dampfdurchlässige, insbesondere von einem Silikon oder einem Nitril-Butadien-Kautschuk (NBR) gebildete Vergußmasse eingekapselt ist und das Batteriefach wasserdicht mit einer das Batteriefach vollständig umschließenden und hermetisch abdichtenden Gehäusewandung ausgebildet ist.

9. Küchenwaage nach einem der vorhergehenden Ansprüche, **dadurch gekennzeichnet, dass** die den Unterbau (2) bildende Halbschale zum Abhalten von Feststoffen von einem, an den Rändern fest mit der Halbschale verbundenen und engmaschigen Netz mit hydrophoben Oberflächeneigenschaften abgedeckt ist, das bevorzugt eine Maschenweite von weniger als 1 mm aufweist und im mittleren Bereich lose auf der Halbschale auffliegt, wobei die Stützelemente (5) zweiteilig mit einem oberen, mit der Tragplatte (1) verbundenen Bereich und einem unteren mit der Halbschale verbundenen Bereich ausgebildet sind und der untere und der obere Bereich der Stützelemente (5) das Netz zwischen sich einklemmen.

10. Küchenwaage nach einem der vorhergehenden Ansprüche, **dadurch gekennzeichnet, dass** die Elektronik (4) und die Anzeigevorrichtung unterhalb der Tragplatte (1) an dieser angeordnet sind, wobei der Unterbau (2) von wenigstens drei, bevorzugt vier Stützfüßen gebildet ist, die über die Wägezellen (6) mit der Tragplatte (1) verbunden sind und wobei die Anzeigevorrichtung über eine Vergußmasse wasserdicht mit der Tragplatte (1) verkapselt sind.

11. Küchenwaage nach einem der vorhergehenden Ansprüche, **dadurch gekennzeichnet, dass** die Elektronik (4) Feuchtigkeitssensoren aufweist, die die Feuchtigkeit der Beschichtung der Wägezellen (6) zu ermitteln vermag, wobei die Elektronik (4) derart ausgebildet ist, dass oberhalb eines vorgegebenen Schwellwertes eine Messung nicht durchgeführt wird.

12. Küchenwaage nach einem der Ansprüche 1 bis 10, **dadurch gekennzeichnet, dass** die Elektronik (4) zur Ermittlung des Gewichtes eine Messbrücke aufweist, wobei die Elektronik (4) die in die Elektronik (4) eingedrungene Feuchtigkeit durch Ermittlung des Driftverhaltens des Nullpunktes ermittelt und bei Wegdriften des Nullpunktes von einem zu feuchten Zustand ausgeht und eine Messung nicht durchführt.

13. Küchenwaage nach einem der vorhergehenden Ansprüche, **dadurch gekennzeichnet, dass** der fugenartige Spalt zwischen Unterbau (2) und Tragplatte (1) über ein insbesondere senkrecht zur Bewegungsrichtung der Tragplatte (1) angeordnetes, elastisches Sieb geschlossen ist, wobei das Sieb insbesondere eine Maschenweite von weniger als 1 mm aufweist und bevorzugt aus Kunststoff gefertigt ist.

14. Küchenwaage nach einem der vorhergehenden Ansprüche, **dadurch gekennzeichnet, dass** der Unterbau (2) und die Tragplatte (1) über eine lösbare Magnetverbindung miteinander verbunden sind, wobei insbesondere zumindest drei Paare von nebeneinander angeordneten Magneten sowohl an der Tragplatte (1) als auch am Unterbau (2) vorgesehen sind, wobei die Magnete so angeordnet sind, dass durch die Anziehungskraft bzw. Abstoßungskraft der einzelnen Magnete die Tragplatte (1) auf dem Unterbau (2) beim Zusammensetzen selbsttätig zentriert wird.

15. Küchenwaage nach einem der vorhergehenden Ansprüche, **dadurch gekennzeichnet, dass** der fugenartige Spalt eine lichte Weite von mehr als 1 mm, bevorzugt mehr als 2 mm und weiter bevorzugt zwischen 3 und 5 mm aufweist.

## Claims

1. Kitchen scales with a support plate (1), a substructure (2) carrying the support plate (1) and at least one weighing cell (6) including a minimum of one strain gauge (10) which is deformed by the load lying on the support plate (1), electronics (4) which can calculate the weight of the load from the degree of deformation of the weighing cells, as well as a display device for displaying the calculated weight and a battery compartment for receiving a voltage source supplying the electronics (4) with power, wherein the kitchen scales are designed as open kitchen scales with a gap between the support plate (1) and the substructure (2), so that water and/or moisture can enter through the gap into the kitchen scales and leave the kitchen scales, and the electronics (4) as well as the display device are encapsulated in a moisture-proof and waterproof way, and the battery compartment is sealed against an ingress of water, **characterised in that** the weighing cell (6) is equipped with a coating (9) designed as a parylene coating at least in the area of the strain gauge (10).

2. Kitchen scales according to claim 1, **characterised in that** the electronics (4) have at least one circuit board equipped with a parylene coating, wherein the complete electronics (4) in particular, and all weighing cells (6) are completely covered with a parylene coating.

3. Kitchen scales according to one of the two preceding claims, **characterised in that** the weighing cell (6) is not equipped with a further cover layer with the exception of the coating (9), wherein the electronics (4) have sensors for determining the moisture content of the coating (9) and are designed in such a way that they can firstly switch the kitchen scales to an inactive condition during the detection of a moist or wet condition above a pre-determined threshold value of the determined moisture content of the coating (9), in which a weight measurement cannot be carried out or the result of which is not displayed, and can secondly switch the kitchen scales to an operational condition when the threshold value is not reached, in which the weight of the load on the support plate (1) is measured and displayed.

4. Kitchen scales according to one of the preceding claims, **characterised in that** the parylene coating is an insert and hydrophobic polymer coating, a coating (9) made of hydrocarbon poly-p-xylylene (parylene N) or a coating (9) made of halogenated polymers (parylene C, parylene D or parylene HT) and has a thickness of up to 1 mm, in particular a thickness of between 0.01 and 0.5 mm.

5. Kitchen scales according to one of the preceding claims, **characterised in that** the electronics (4) and the weighing cells (6) are equipped with a double or multiple parylene coating at least in sections thereof, wherein each of the parylene coatings is selected from a coating (9) from the group of parylene N, parylene C, parylene D and parylene HT.

6. Kitchen scales according to one of the preceding claims, **characterised in that** the parylene coating is equipped with an addition coating, in particular an elastic, liquid-tight and vapour-permeable protective layer that can protect the parylene coating against mechanical influence and is in particular formed from a silicone or a nitrile butadiene rubber (NBR).

7. Kitchen scales according to one of the preceding claims, **characterised in that** the support plate (1) is disconnectably connected with the substructure (2) and the substructure (2) is designed as a flat half-shell with a minimum of three support elements (5) carrying the support plate (1), wherein the support elements (5) are supported on the weighing cells (6).

8. Kitchen scales according to one of the preceding claims, **characterised in that** the electronics (4) are encapsulated with a liquid-tight and vapour-permeable casting compound, preferably formed from a silicone or a nitrile butadiene rubber (NBR), and that the battery compartment is designed water-tight with housing walls completely enclosing and hermetically sealing the same.

9. Kitchen scales according to one of the preceding claims, **characterised in that** the half-shell forming the substructure (2) is covered with close-meshed net with hydrophobic surface characteristics that is firmly connected with the half-shell at its edges for keeping out solids, which preferably has a mesh width of less than 1 mm and lies loosely on the half-shell in its central area, wherein the support elements (5) are formed in two parts with an upper area connected with the support plate (1) and a lower area connected with the half-shell, and the lower and the upper areas of the support elements (5) clamp the net between themselves.

10. Kitchen scales according to one of the preceding claims, **characterised in that** the electronics (4) and the display device are arranged below the support plate (1) on the same, wherein the substructure (2) is formed by at least three, preferably four support feet, which are connected with the support plate (1) via the weighing cell (6), and wherein the display device is encapsulated water-tight with the support plate (1) with a casting compound.

11. Kitchen scales according to one of the preceding claims, **characterised in that** the electronics (4) have moisture sensors that can determine the moistness of the coating of the weighing cells (6), wherein the electronics (4) are designed in such a way that a measurement is not carried out above a pre-determined threshold value.

12. Kitchen scales according to one of the claims 1 to 10, **characterised in that** the electronics (4) have a measuring bridge for determining the weight, wherein the electronics (4) calculate the moisture that has penetrated the electronics (4) by determining the drift behaviour of the zero point and assumes an excessively wet condition when the zero points drifts away and does not carry out a measurement.

13. Kitchen scales according to one of the preceding claims, **characterised in that** the joint-like gap between substructure (2) and support plate (1) is closed by an elastic sieve in particular arranged vertically to the direction of movement of the support plate (1), wherein the sieve in particular has a mesh width of less than 1 mm and is preferably made of plastic.

14. Kitchen scales according to one of the preceding claims, **characterised in that** substructure (2) and the support plate (1) are connected with each other with a disconnectable magnetic connection, wherein at least three pairs of magnets arranged next to each other are in particular provided on the support plate (1) as well as on the substructure (2), wherein the magnets are arranged in such a way that the support plate (1) is automatically centred on the substructure (2) during assembly by the attraction force or repelling force of individual magnets.

15. Kitchen scales according to one of the preceding claims, **characterised in that** the joint-like gap has a clear width of more than 1 mm, preferably more than 2 mm, and more preferably of between 3 and 5 mm.

## Revendications

1. Balance de cuisine comprenant une plaque de support (1), une base (2) portant la plaque de support (1) et au moins une cellule de pesage (6) déformée par une charge posée sur la plaque de support (1) et comprenant au moins une jauge extensométrique (10), une électronique (4), qui est en mesure de calculer le poids de la charge à partir du degré de la déformation des cellules de pesage, et un dispositif d'affichage permettant d'afficher le poids déterminé et un compartiment à batterie permettant de loger une source de tension alimentant l'électronique (4) en courant, la balance de cuisine étant réalisée sous la forme d'une balance de cuisine ouverte avec un interstice du type fente entre la plaque de support (1) et la base (2), de sorte que de l'eau et/ou de l'humidité peut pénétrer dans la balance de cuisine et en sortir à travers cet interstice et que l'électronique (4) ainsi que le dispositif d'affichage sont encapsulés de manière étanche à l'humidité et à l'eau et que le compartiment à batteries est protégé contre la pénétration de l'eau, **caractérisée en ce que** la cellule de pesage (6) est munie d'un revêtement (9) en parylène du moins dans la zone de la jauge extensométrique (10).

2. Balance de cuisine selon la revendication 1, **caractérisée en ce que** l'électronique (4) présente au moins une platine munie d'un revêtement en parylène, la complète électronique (4) et toutes les cellules de pesage (6) en particulier étant revêtues entièrement de parylène.

3. Balance de cuisine selon l'une des deux revendications précédentes, **caractérisée en ce que** la cellule de pesage (6) ne possède pas d'autre couche protectrice que le revêtement (9), l'électronique (4) présentant des capteurs servant à déterminer la teneur en humidité du revêtement (9) et étant formée de manière à pouvoir d'un côté, lors de la détermination d'un état humide ou mouillé excédant la valeur de seuil prédéfinie d'une certaine teneur en humidité du revêtement (9), mettre la balance de cuisine dans un état inactif, dans lequel une mesure de poids n'est pas effectuée ou dont le résultat ne s'affiche pas, et d'autre côté, après le passage en dessous de la valeur limite, mettre la balance de cuisine dans un état actif, dans lequel le poids de la charge posée sur la plaque de support (1) est mesuré et affiché.

4. Balance de cuisine selon l'une des revendications précédentes, **caractérisée en ce que** le revêtement en parylène est un revêtement polymérique inerte et hydrophobe, un revêtement (9) en poly-p-xylylène hydrocarbure (parylène N) ou un revêtement (9) en polymères halogénés (parylène C, parylène D ou parylène HT) d'une épaisseur allant jusqu'à 1 mm, en particulier d'une épaisseur entre 0,01 et 0,5 mm.

5. Balance de cuisine selon l'une des revendications précédentes, **caractérisée en ce que** l'électronique (4) et les cellules de pesage (6) sont munies au moins partiellement d'un revêtement en parylène double ou multicouches, chaque revêtement en parylène étant un revêtement (9) choisi dans le groupe de parylène N, parylène C, parylène D et parylène HT.

6. Balance de cuisine selon l'une des revendications précédentes, **caractérisée en ce que** le revêtement en parylène est muni d'un revêtement complémentaire, en particulier d'une couche protectrice élastique, étanche aux liquides et perméable à la vapeur étant en mesure de protéger le revêtement en parylène des impacts mécaniques et étant formée à partir d'une silicone ou d'un caoutchouc butadiène-acrylonitrile (NBR).

7. Balance de cuisine selon l'une des revendications précédentes, **caractérisée en ce que** la plaque de support (1) est relié à la base (2) de manière détachable et que la base (2) présente la forme d'une demi-coque plate avec au moins trois éléments d'appui (5) soutenant la plaque de support (1), les éléments d'appui (5) s'appuyant sur les cellules de pesage (6).

8. Balance de cuisine selon l'une des revendications précédentes, **caractérisée en ce que** l'électronique (4) est encapsulée au moyen d'une masse de scellement étanche aux liquides et perméable à la vapeur, formée en particulier à partir d'une silicone ou d'un caoutchouc butadiène-acrylonitrile (NBR) et que le compartiment à batteries est étanche à l'eau et réalisé avec une paroi de logement hermétique entourant complètement le compartiment à batteries.

9. Balance de cuisine selon l'une des revendications précédentes, **caractérisée en ce que** la demi-coque constituant la base (2) est recouverte, pour retenir des matières solides, d'un filet à maillage serré ayant des propriétés superficielles hydrophobes et relié fermement aux bords de la demi-coque, d'une largeur de maille de préférence inférieure à 1 mm et posé sur la demi-coque de manière lâche, les éléments d'appui (5) étant formés en deux parties avec une zone supérieure reliée à la plaque de support (1) et une zone inférieure reliée à la demi-coque, et les zones inférieure et supérieure des éléments d'appui (5) enserrant entre elles le filet.

10. Balance de cuisine selon l'une des revendications précédentes, **caractérisée en ce que** l'électronique (4) et le dispositif d'affichage sont disposés au-dessous de la plaque de support (1), la base (2) étant formée d'au moins trois, de préférence quatre, pieds d'appui reliés à la plaque de support (1) à travers les cellules de pesage (6) et le dispositif d'affichage étant encapsulé avec la plaque de support (1) de façon étanche à l'eau au moyen d'une masse de scellement.

11. Balance de cuisine selon l'une des revendications précédentes, **caractérisée en ce que** l'électronique (4) présente des capteurs d'humidité étant en mesure de déterminer l'humidité du revêtement des cellules de pesage (6), l'électronique (4) étant réalisé de manière à ne pas permettre une mesure au-dessus de valeur de seuil prédéfinie.

12. Balance de cuisine selon l'une des revendications 1 à 10, **caractérisée en ce que** l'électronique (4) comprend un pont de mesure servant à déterminer le poids, l'électronique (4) déterminant l'humidité pénétrée dans l'électronique (4) en déterminant le comportement de dérivation du point zéro et, en cas de dérivation du point zéro, partant d'un étant trop humide et ne pas procédant à une mesure.

13. Balance de cuisine selon l'une des revendications précédentes, **caractérisée en ce que** l'interstice en forme de joint entre la base (2) et la plaque de support (1) est fermé par un tamis élastique disposé en particulier perpendiculairement par rapport au sens de mouvement de la plaque de support (1), le tamis ayant une largeur de maille inférieure à 1 mm et étant fabriqué de préférence en plastique.

14. Balance de cuisine selon l'une des revendications précédentes, **caractérisée en ce que** la base (2) et la plaque de support (1) sont reliées entre elles par un lien aimanté détachable, au moins trois paires d'aimants disposés côte à côte sont en particulier prévus aussi bien sur la plaque de support (1) que sur la base (2), les aimants étant disposés de manière telle que la plaque de support (1) se centre automatiquement sur la base (2) lors de l'assemblage grâce à la force d'attraction ou à la force de répulsion des aimants individuels.

15. Balance de cuisine selon l'une des revendications précédentes, **caractérisée en ce que** l'interstice en forme de joint est d'une largeur intérieure supérieure à 1 mm, de préférence supérieure à 2 mm et encore plus préférablement entre 3 et 5 mm.
